# EUROPEAN PATENT APPLICATION

(11) **EP 1 693 700 A1**
(43) Date of publication of application: **23.08.2006**
(21) Application number: 06101426.2
(22) Date of filing: 08.02.2006
(51) Int. Cl.: G02F 1/13357

(54) **Light emitting diode unit for a backlight device**

(30) Priority: 16.02.2005 KR 2005012902
(71) Applicant: Samsung Electronics Co., Ltd, Suwon-si, Gyeonggi-do 442-742 (KR)
(72) Inventor: Jung, Il-yong, Yeongtong-gu Suwon-si Gyeonggi-do (KR); Park, Joon-chan, Anyang-si Gyeonggi-do (KR); Wang, Jong-min, Bundang-gu Seongnam-si Gyeonggi-do (KR); Seong, Ki-bum, Anyang-si Gyeonggi-do (KR)
(74) Representative: Read, Matthew Charles

(57) **Abstract**

A light emitting diode unit (15) includes a plurality of light emitting elements (5) for generating light of at least two different wavelengths and a cap (10) arranged to totally internally reflect the light emitted from the light emitting elements (5). The light from the light emitting elements (5) is mixed by undergoing multiple total internal reflections before exiting the cap (10). As this mixing is performed within the light emitting diode unit (15), the distance (d) between the light emitting diode unit (15) and other optical elements of the backlight unit (100), such as a diffusing sheet (40) can be reduced when compared with prior art arrangements. This can result in a backlight unit (100) and display device (200) having a relatively slim configuration. The light emitting elements (5) are preferably arranged on a base (7), at its periphery rather than its centre, in order to reduce the occurrence of hotspots.

## Description

The present invention relates to a multi-chip light emitting diode unit and also to a backlight unit and a display device employing the same.

A liquid crystal display (LCD) device is a flat panel display device for use in, say, a notebook computer, a desktop computer, an LCD-TV or a mobile communication terminal. The LCD device does not generate light in order to form an image. Instead, the liquid crystal display device receives the illumination it requires from a backlight unit. The backlight unit may be provided on the rear surface of the liquid crystal display device.

Backlight units can be classified into two types: the direct light type, which generate illumination using a plurality of light sources provided under the liquid crystal panel, and the edge light type, which generate illumination using a light source provided to one side of a light guide panel (LGP) located behind the liquid crystal panel. For example, a direct light type backlight unit may use a light emitting diode as a point light source for emitting Lambertian. The edge light type backlight unit usually uses a cold cathode fluorescent lamp (CCFL) as its light source. However, since cold cathode fluorescent lamps generally have a limited colour range, they are not suitable for use in a high-definition, high-resolution TV or monitor. Recently, light emitting diodes (LEDs) have become an attractive substitute for CCFLs.

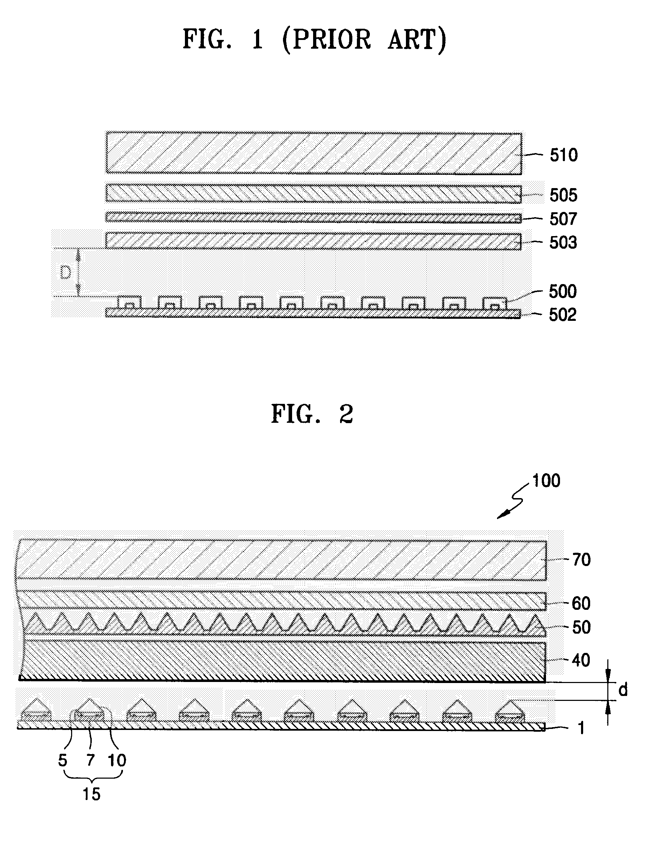

As shown in Figure 1, a conventional backlight unit includes an array of LEDs 500, a diffusing plate 503 and a diffusing sheet 505 for providing uniform illumination for a liquid crystal panel 510. A reflecting plate 502 for reflecting the light emitted from the LEDs 500 onto the liquid crystal panel 510 is provided at the rear of the LEDs 500. A prism sheet 507, which adjusts the optical path of the light emerging from the diffusing plate 503 to direct it to the liquid crystal panel 510, is placed between the diffusing sheet 505 and the diffusing plate 503.

In order for the light from the LEDs 500 to mixed together to produce white light, it is necessary to provide a gap between the array of LEDs 500 and the diffusing plate 503. The overall thickness of the backlight unit depends on the size of this gap. If the distance D between the LEDs 500 and the diffusing plate 503 is large, the backlight unit will be thick. As a result, the liquid crystal display device including the backlight unit, for example a LCD or TV will also be thick. The thickness of the backlight unit could be reduced by decreasing the distance D but this would result in poor mixing of the light emitted by the LEDs 500 and the appearance of hot spots when the backlight unit is viewed from the front. Both these effects degrade the image quality.

The objects of the invention include the provision of a backlight unit and a liquid crystal display device that can be relatively slim when compared with corresponding prior devices. This object can be achieved by reducing the distance required for effective mixing of the light generated by a light source.

According to the present invention, a light emitting diode unit comprises a plurality of light emitting elements configured to emit light of least two different wavelengths and a cap arranged to totally internally reflect the light emitted from the light emitting elements.

The plurality of the light emitting elements may be arranged on a base, at the periphery of the base.

The cap may have the shape of at least one of a cone, a multi-faceted cone or dome.

The cap may be a lens.

The plurality of light emitting elements may include a first light emitting element for irradiating red light, a second light emitting element for irradiating green light and a third light emitting element for irradiating blue light.

The invention also provides a backlight unit comprising at least one such light emitting diode unit.

The backlight unit may comprise a reflecting plate configured to reflect incident light, on which is provided a plurality of said light emitting diode units, and a diffusing plate which is located at in front of the light emitting diode units and arranged to diffuse and transmit light emitted by the light emitting diode units.

The invention further provides a liquid crystal display device including the backlight unit and a liquid crystal panel, which forms an image using light generated by the backlight unit.

The above and other features and advantages of the present invention will become more apparent by describing in detail exemplary embodiments thereof with reference to the attached drawings, in which:
Figure 1 shows a conventional direct light type backlight unit employed in a liquid crystal display device;
Figure 2 is a schematic cross-sectional view of a backlight unit according to an embodiment of the invention;
Figure 3 shows a plurality of multi-chip light emitting diode units located on a reflecting plate in the backlight unit of Figure 2;
Figure 4A is a perspective view of a multi-chip light emitting diode unit according to an embodiment of the invention;
Figure 4B is a cross-sectional view of the multi-chip light emitting diode unit shown in Figure 4A;
Figure 5 shows a light reflecting path in a cone-shaped cap employed in the multi-chip light emitting diode unit of Figure 4A;
Figure 6A is a cross-sectional view of a multi-chip light emitting diode unit according to another embodiment of the invention;
Figure 6B is a perspective view of the multi-chip light emitting diode unit according to yet another embodiment of the present invention;
Figure 7 is a graph showing light intensity versus angle of radiation for a backlight unit employing the multi-chip light emitting diode unit of Figure 4A;
Figure 8 is a graph showing light intensity versus angle of radiation for a backlight unit employing the multi-chip light emitting diode unit of Figure 6A;
Figure 9 shows hot spot measurements for a backlight unit employing the multi-chip light emitting diode unit of Figure 4A;
Figure 10 shows hot spot measurements for the backlight unit employing a multi-chip light emitting diode unit of Figure 6A; and
Figure 11 is a schematically drawing of a liquid crystal display device according to an embodiment of the present invention.

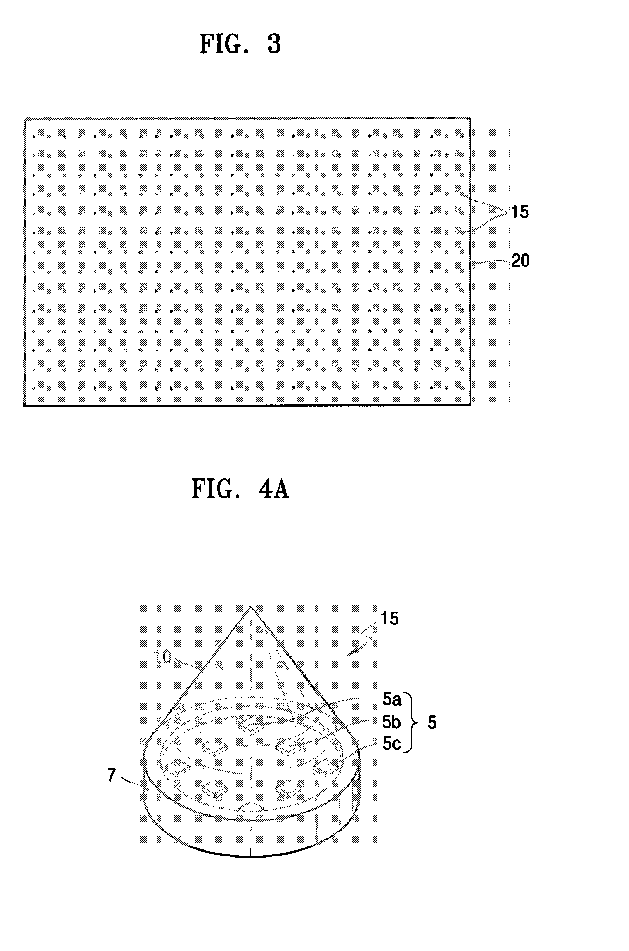

Referring to Figure 2, a backlight unit 100 according to an embodiment of the present invention includes a reflecting plate 1, a plurality of multi-chip light emitting diode units 15 arranged on the reflecting plate 1 and a diffusing plate 40. As shown in Figure 3, the plurality of multi-chip light emitting diode units 15 are arranged on the reflecting plate 1 in a two-dimensional array.

The multi-chip light emitting diode unit 15 includes a plurality of light emitting elements for emitting light at least two different wavelengths and a cap for causing total internal reflection of the light from the light emitting diodes. The different wavelengths of light from the light emitting elements are totally internally reflected multiple times and, thus, mixed in the light emitting diode unit.

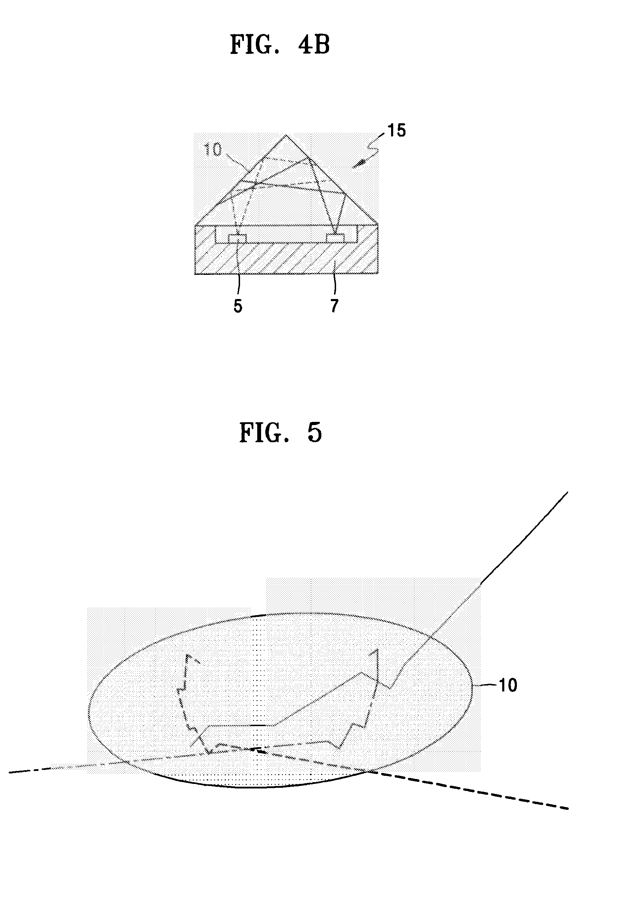

A multi-chip light emitting diode unit according to an embodiment of the invention is shown in Figures 4A and 4B. In the light emitting diode unit 15, a plurality of light emitting elements 5 are arranged on a base 7 and covered by a cap 10.

The light emitting elements 5 emit light of at least two different wavelengths. For example, the light emitting elements 5 may include a first light emitting element 5a for emitting red light, a second light emitting element 5b for emitting green light and a third light emitting element 5c for emitting blue light. In Figure 4A, eight light emitting elements are shown, including three first light emitting elements 5a, two second light emitting elements 5b, and three third light emitting elements 5c. The number or arrangement of the light emitting elements for each wavelength can be selected according to the desired colour temperature range, taking account of the amount of light emitted from the light emitting elements 5 at each wavelength. Since the light emitting diode unit 15 can be configured with various numbers and arrangements of light emitting elements 5a, 5b, 5c for emitting the multi-wavelength lights, the range of colour that can be generated by the light emitting diode unit 15 and the colour selectivity is good. Also, the multi-chip light emitting diode unit 15 is of similar size to a single-chip light emitting diode unit.

The cap 10 is made of transparent material and may be a lens. The material of the cap 10 has a greater refractive index than the medium between the light emitting diode unit 15 and the diffusing plate 40, in order to satisfy the total reflection condition. For example, if the medium between the light emitting diode unit 15 and the diffusing plate 40 is air, the cap may be made of epoxy resin or polymethylmethacylate (PMMA), with a refractive index of 1.49. Since the cap 10 has a greater refractive index than air, light having an angle of incidence greater than a threshold angle θ_{C} is totally internally reflected multiple times before leaving the cap 10. In this manner, the light from the light emitting elements 5 is mixed in the cap 10, and white light is generated. Since the different wavelengths of light are mixed in the cap 10, the light need not be mixed between the light emitting diode unit 15 and the diffusing plate 40. Accordingly, the distance d (see Figure 2) between the light emitting diode unit 15 and the diffusing plate 40 can be less than the equivalent distance D in the prior backlight unit of Figure 1.

Suitable shapes for the cap 10 include a cone, dome or pyramid. In the light emitting diode unit 15 shown in Figures 4A and 4B, the cap 10 is in the form of a cone.

It is preferable, but not necessary, for the light emitting elements 5a, 5b and 5c to be arranged at the periphery of the base 7, in other words, not in the centre of the base 7. If the light emitting elements are not arranged in the centre of the base 7, hot spots can be prevented. Hot spots are produced when the light from the light emitting elements 5 is not uniformly diffused, and degrade image quality. If the light emitting elements 5 are located in the center of the base, most of the light exits the light emitting diode unit 15 through the vertex of the cap 10, instead of being totally internally reflected, because its angle of incidence on the surface of the cap 10 is less than the threshold angle θ_{c}. If the light emitting elements are arranged at the periphery of the base 7, most of the light from the light emitting elements strikes the cap 10 with an angle of incidence exceeding the threshold angle θ_{c} and so is totally internally reflected.

Figure 5 depicts an example path of a light beam at the surface of the cone-shaped cap 10, and shows that the light is totally internally reflected multiple times before exiting.

The reflecting plate 1 enhances the efficiency of the light emitting diode unit 15 by reflecting incident light from the light emitting elements 5 toward the diffusing plate 40.

The white light produced by the light emitting diode unit 15 is diffused by the diffusing plate 40. A prism sheet 50 is provided for adjusting the optical path of the diffused light. Also, a brightness enhancement film (BEF) 60 and a polarization enhancement film 70, for enhancing the polarization efficiency, may be further provided in front of the prism sheet 50. The brightness enhancement film 60 enhances the brightness by refracting and focusing the light emitted from the diffusing plate 40 to increase the directionness of the light. In this particular example, the polarization enhancing film 70 transmits P-polarization light and reflects S-polarization light.

As mentioned above, since the light emitting diode unit 15 includes a plurality of light emitting elements 5 for emitting light at multiple wavelengths and the cap 10 for totally internally reflecting and mixing the light emitted from the light emitting elements 5, the space for mixing the light emitted from the light emitting diode unit can be greatly reduced. Thereby, the space or distance d (see Figure 2) between the light emitting diode unit 15 and the diffusing plate 40 can be greatly reduced and the overall thickness of the backlight unit can be reduced.

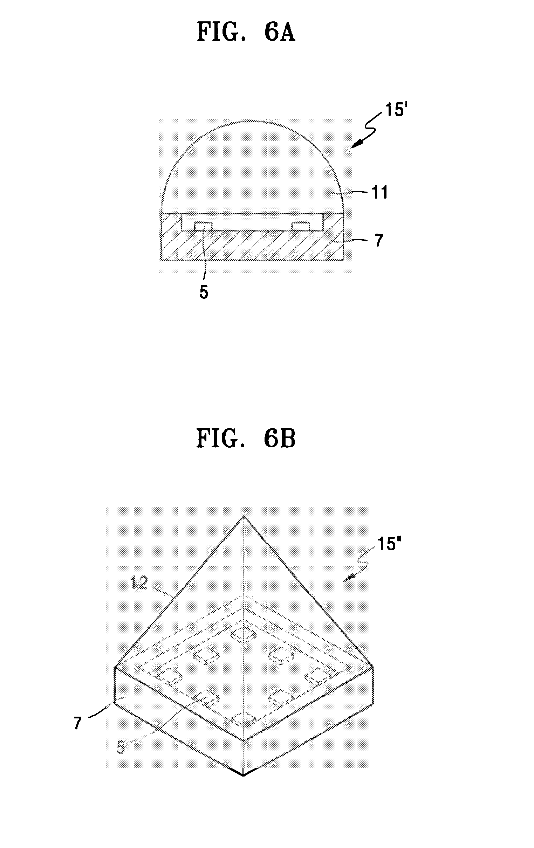

Figure 6A depicts a light emitting diode unit 15' according to another embodiment of the invention. The light emitting diode unit 15' includes light emitting elements 5, which are arranged on a base 7 and emit at least two wavelengths of light, and a dome-shaped cap 11 at the upper side of the light emitting elements 5. In the light emitting diode unit 15', it is preferable, but not necessary, that the light emitting elements 5 are arranged at the periphery of the base 7, rather than its centre. The different wavelengths of light emitted by the light emitting elements 5 are totally internally reflected several times and mixed in the cap 11 before exiting the cap 11.

Figure 6B depicts a light emitting diode unit 15" according to yet another embodiment of the invention. The light emitting diode unit 15" comprises a cap 12 having a pyramid shape, for example, a quadrangular shape.

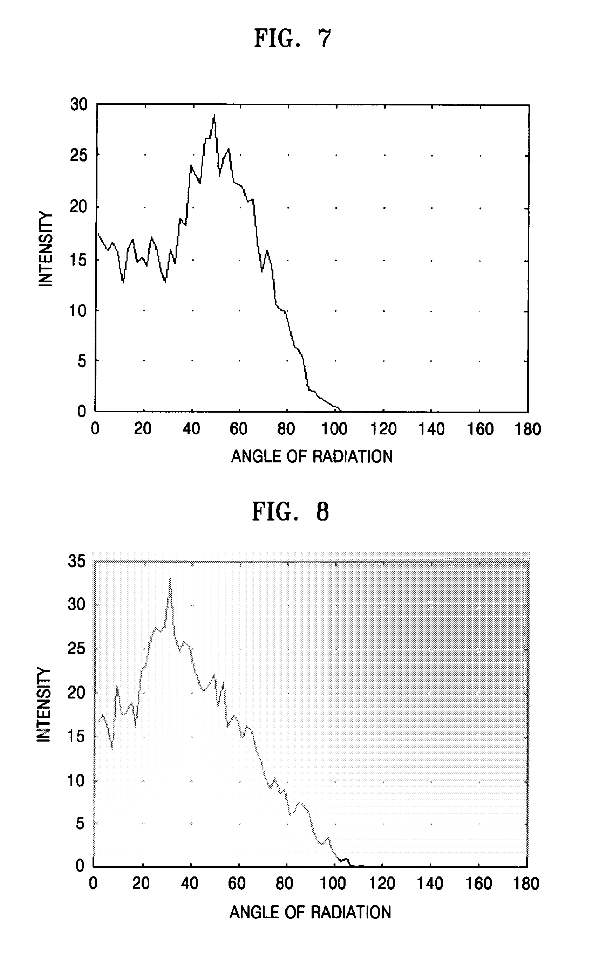

Figure 7 is a graph of light intensity versus angle of radiation for the light emitting diode unit 15 shown in Figures 4A and 4B, where an angle of 0° indicates light emerging from the apex of the cap 10. Figure 7 shows that most of the light produced by the light emitting diode unit 15 exits the cap 10 at an angle between about 50~60°.

Figure 8 is a graph of light intensity versus angle of radiation for the light emitting diode unit 15' of Figure 6A. Here, most of the light produced by the light emitting diode unit 15' is emitted at an angle in the range of about 30~40°.

According to Figures 7 and 8, the intensity of the light emitted at or around 0° is relatively small. Accordingly, the use of such light emitting diode units 15, 15' can thus reduce, or prevent, the occurrence of hot spots in a direct light type backlight unit 100.

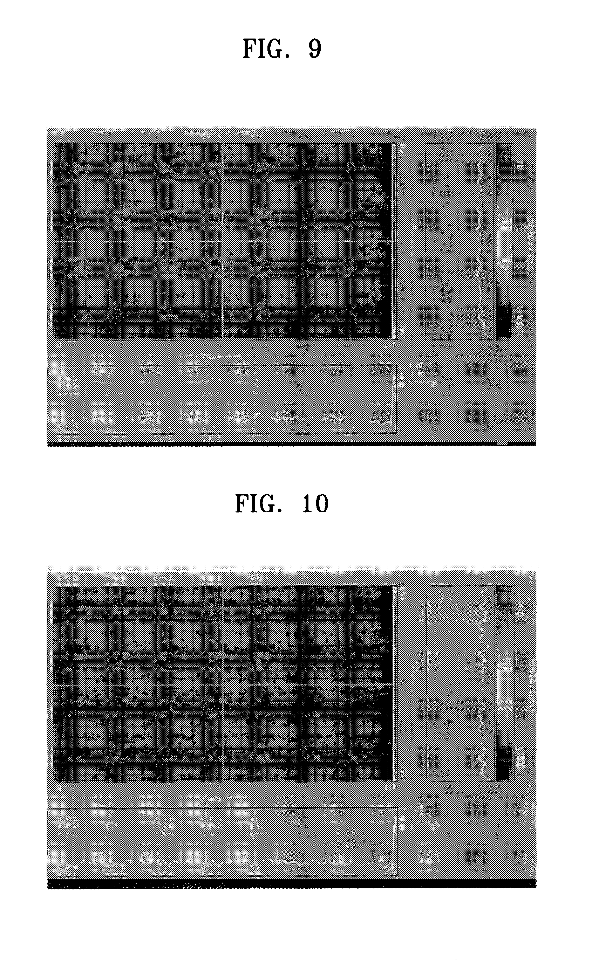

Figure 9 depicts a simulated distribution of the light emitted from the backlight unit 100 employing the light emitting diode unit 15 of Figures 4A and 4B, while Figure 10 simulation light distribution for a backlight unit employing the light emitting diode unit 15' of Figure 6A. Comparing Figure 9 with Figure 10, the cone-shaped cap 10 is better than the dome-shaped cap 11 at reducing the effect of hot spots. However, the backlight unit having the dome-shaped cap 11 still benefits from reduced hotspots when compared with the conventional backlight unit shown in Figure 1.

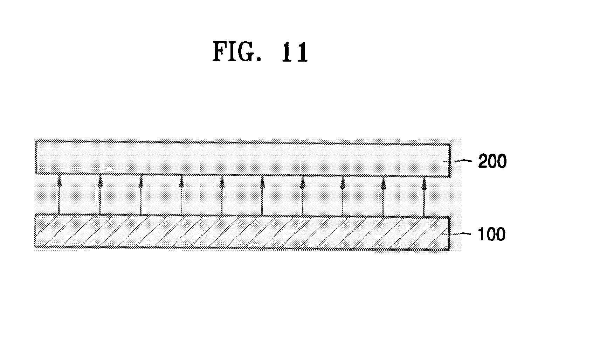

Figure 11 shows a liquid crystal display device including a backlight unit 100 according to an embodiment of the invention. The liquid crystal display device includes a liquid crystal panel 200, which is illuminated by the backlight unit 100 and forms an image. The backlight unit 100 employs multi-chip light emitting diode units 15, 15' or 15".

The liquid crystal panel 200 includes pixel units, each comprising a thin film transistor and an electrode, and displays the image by applying an electric field to a liquid crystal. Since the structure of the liquid crystal panel and the circuitry for driving the liquid crystal display device are widely known, their description will be omitted.

As mentioned above, the multi-chip light emitting diode unit 15, 15', 15" of the embodiments described hereinabove include a plurality of light emitting elements 5 for emitting light of at least two different wavelengths. The light emitted by the light emitting elements 5 undergoes multiple total internal reflections and is thus mixed before exiting the light emitting diode unit 15, 15', 15". Therefore, the space for mixing the light outside the light emitting diode unit can be greatly reduced when compared with the prior backlight unit shown in Figure 1. Accordingly, the thickness of a backlight unit comprising the multi-chip light emitting diode unit 15, 15', 15" and the liquid crystal display device comprising such a backlight unit can also be greatly reduced.

Since most light is exits the light emitting diode unit 15, 15' at an angle other than 0°, as discussed above in relation to Figures 7 and 8, hot spots can be reduced or even prevented. Consequently, image quality can be improved.

Furthermore, the number of light emitting elements 5 for emitting light of different wavelengths and the arrangement of the light emitting elements 5 can be easily adjusted, when compared with a single-chip light emitting diode unit, and thus the range of colours that can be produced by the backlight unit can be greatly increased to ensure a natural image quality.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A light emitting diode unit (15) comprising:
a plurality of light emitting elements (5) configured to emit light of least two different wavelengths; and
a cap (10) arranged to totally internally reflect the light emitted from the light emitting elements (5).

2. The light emitting diode unit (15) according to Claim 1, wherein the plurality of light emitting elements (5) are arranged on a base (7), at a periphery of the base (7).

3. The light emitting diode unit (15) according to Claim 1 or 2, wherein the cap (10, 11, 12) is shaped as a cone, pyramid or dome.

4. The light emitting diode unit (15) according to Claim 1, 2 or 3, wherein the cap (10) is composed of a lens.

5. The light emitting diode unit (15) according to any of the preceding claims, wherein the plurality of light emitting elements (5) include a first light emitting element (5a), configured to emit red light, a second light emitting element (5b), configured to emit green light, and a third light emitting element (5c), configured to emit blue light.

6. A backlight unit (100) comprising:
a reflecting plate (1);
a plurality of light emitting diode units (15) according to any of the preceding claims; and
a diffusing plate (40) which diffuses and transmits light generated by the backlight unit (100).

7. A liquid crystal display device comprising:
a backlight unit (100) according to Claim 6; and
a liquid crystal panel (200) which forms an image using light generated by the backlight unit (100).
